# EUROPEAN PATENT SPECIFICATION

(11) **EP 2 754 333 B1**
(45) Date of publication and mention of the grant of the patent: **23.09.2020**
(21) Application number: 12766914.1
(22) Date of filing: 31.08.2012
(51) Int. Cl.: H05B 47/10, H05B 45/00

(54) **RETROFIT LED ILLUMINATING APPARATUS**
NACHRÜSTBARE LED-BELEUCHTUNGSVORRICHTUNG
APPAREIL D'ÉCLAIRAGE À DEL DE RATTRAPAGE

(30) Priority: 06.09.2011 CN 201110262821
(43) Date of publication of application: 16.07.2014
(73) Proprietor: SITECO GmbH, 83301 Traunreut (DE)
(72) Inventor: DAI, Xuewei, Shenzhen Guangdong 518053 (CN); YE, Zesheng, Shenzhen Guangdong 518053 (CN); YUAN, Haiping, Shenzhen Guangdong 518053 (CN); ZHANG, Dezhao, Shenzen Guangdong 518053 (CN)
(74) Representative: Schmidt, Steffen
(86) International application number: PCT/EP2012/066989
(87) International publication number: WO 2013/034500

(56) References cited:
- WO-A1-2011/014111
- DE-A1- 4 421 736
- GB-A- 2 155 258
- US-A1- 2010 013 396
- US-A1- 2011 006 696
- US-A1- 2011 204 813

## Description

### Technical Field

The present invention relates to an LED illuminating apparatus, and in particular, to an LED illuminating apparatus replacing a fluorescent lamp.

### Background Art

The LED illuminating technology is welcomed by more and more people as it has the advantages of a long service life, environmental friendliness and good luminescence efficiency. Thus, there are a lot of illuminating apparatus replacing the common fluorescent lamp tube with an LED lamp tube available in the market. It is well-known that a common fluorescent lamp illuminating apparatus comprises a fluorescent lamp tube, a starter, a CCG and a lamp holder, the fluorescent lamp tube and the CCG are mounted in the lamp holder; moreover, a starter socket is further provided on the lamp holder, and the starter can be inserted into the starter socket. An LED lighting apparatus can be accomplished simply by replacing the fluorescent lamp tube with the LED lamp tube without changing the whole configuration of the illuminating apparatus.

However, people have more and more demands to functions of the illuminating apparatus, for instance, the LED lighting apparatus is demanded to be wirelessly remote controlled, voice controlled, sensor controlled or step dim controlled, etc. There are various types of LED illuminating apparatus such as LED illuminating apparatus that can be wirelessly controlled with a remote in the current market. In order to accomplish the wireless control function, a wireless control module such as RF radio frequency module should be integrated in an LED driver so that the LED illuminating apparatus can be controlled by a remote. And different modules should be integrated in the LED driver in cases where voice control, sensor control or step dim control is demanded. But in order to realize the above functions, different drivers should be designed individually, while the driver per se can only be integrated with one type of function assembly, then the drivers with different functional assemblies usually should be changed in order to realize different functions. However, different functional assemblies can only be added in manufacturing of the drivers and assembling of the lamp tube, which is quite complex to both user and manufacturer and has a relatively high cost.

An earlier patent application WO 2011/014111 A1 discloses a LED lighting apparatus. However, the apparatus does not comprise a control unit in the starter socket.

### Summary of the Invention

In order to solve the above problems, the present invention provides an LED illuminating apparatus, and in particular, an LED illuminating apparatus replacing a fluorescent lamp. The LED illuminating apparatus according to the present invention is capable of simply realizing different functions according to user's requirements, has a relatively low cost and is assembled relatively easily.

The object of the present invention is accomplished via an LED illuminating apparatus through the following solution. The LED illuminating apparatus comprises: an LED lighting assembly and a driver configured to drive the LED lighting assembly, wherein the LED illuminating apparatus further comprises a replaceable control unit configured to control the driver, and a receiving unit connected between the control unit and the driver. The receiving unit receives an instruction signal from the control unit and transmits the same to the driver, and the driver decodes the instruction signal and drives the LED lighting assembly. In the LED illuminating apparatus of the present invention, the control unit is configured to be replaceable, then individual modules each having a certain function according to user's requirements can be provided, such as module realizing RF wireless remote control, voice control, sensor control or step dim control, and one module is replaced by another when a certain function is demanded. Moreover, the receiving unit only needs to transmit the instruction signal from the control unit to the driver and realize a corresponding function, and there is no need to redesign a driver, thus greatly improving the function extension performance of the LED illuminating apparatus and reducing the cost.

According to the present invention, the LED illuminating apparatus is configured to be in a form of traditional fluorescent luminaire, and comprises a starter socket and a lamp holder for mounting the LED lighting assembly configured to be in a form of traditional fluorescent lamp tube, and the control unit the control unit is configured to be in a form of starter applied to the traditional fluorescent luminaire and the control unit can be inserted into the starter socket. In one solution of the present invention, the LED illuminating apparatus, which is used to replace a traditional fluorescent luminaire, uses a lamp holder of the traditional fluorescent lamp, and a starter socket is still retained on the lamp holder. Therefore, the difficulty of changing the control unit is greatly reduced by designing the control unit to be in the form of starter, that is to say, only an outer form of the starter and two original pins of the starter are reserved. A common user, even a user without professional skills, also can change the control unit according to experience in changing the traditional starter, so as to realize a desired function.

According to a preferred solution of the present invention, the control unit comprises a first power line communication assembly and a function assembly. The function assembly may be an RF radio frequency assembly, a voice control assembly, a sensor control assembly or a step dim control assembly, etc. Those assemblies could be obtained from the commercial market. Therefore, the function assemblies do not need to be specially designed in the present invention and could be directly introduced into the LED illuminating apparatus of the present invention. The LED illuminating apparatus can be enabled to have different functions simply by changing the control units with different functional assemblies. Particularly when the RF radio frequency assembly is used, since the RF radio frequency assembly is integrated in the control unit designed to be starter but is not integrated in, for example, the driver, an RF radio frequency signal will not be interfered by a metal radiator, for instance, as the starter usually has a shell made from a plastic.

Preferably, the function assembly is configured as an RF control assembly, a voice control assembly, a sensor control assembly or a step dim control assembly. Of course, the function assembly also can be configured as other types of control assemblies.

Further preferably, the functional assemblies are configured to activate a corresponding function according to control signals from outside. The control signals from the outside are RF radio frequency signals, voice signals, sensor signals or step dim control signals. Of course, the control signals from the outside also can be other types of signals suited to control the functional assemblies according to different functional assemblies integrated in the control unit.

Preferably, the receiving unit is configured as a second power line communication assembly to be used as an interface communicating with the first power line communication assembly. Moreover, the second power line communication assembly is integrated in the driver, greatly simplifying the difficulty of configuring the LED illuminating apparatus; and the driver is configured as a universal driver that can be applied to various types of LED illuminating apparatus. In one solution of the present invention, the driver per se does not have the function of functional control, but only controls the LED lighting assembly according to the instruction signals from the outside so as to realize corresponding functions.

Further preferably, the control unit comprises two pins for supplying an electric power and for communication. Since the control unit is designed to be in the form of starter, the two pins of the starter not only can supply the electric power but also can communicate with the receiving unit, i.e., the starter has the so-called power line communication function. An advantage lies in that there is no need to provide individual electric power supply line or communication line to the control unit, thus reducing the technical difficulty of changing the control unit.

Further preferably, the LED illuminating apparatus further comprises a ballast that is configured as a CCG and connects the driver to a power supply. The CCG used in one solution of the present invention is a CCG generally used in the existing conventional fluorescent lamps. The LED illuminating apparatus according to the present invention is configured to be in a form of conventional fluorescent lamp, the lamp holder for holding the conventional fluorescent lamp tube and the CCG used in the fluorescent lamp tube are retained. In addition, the conventional fluorescent lamp also needs to be connected with a starter in series in a filament loop while using the CCG so as to start the lamp tube, thus a socket for the starter is also retained in the LED illuminating apparatus according to the present invention. The LED illuminating apparatus according to the present invention is realized by replacing a common fluorescent lamp tube with an LED lamp tube, and the lamp holder (including the original CCG) in the original conventional fluorescent lamp is used, therefore, there is no need to redesign the lamp holder of the original fluorescent lamp, such as reconstruction of a circuit.

### Brief Description of the Drawings

The accompanying drawings constitute a part of the present Description and are used to provide further understanding of the present invention. Such accompanying drawings illustrate the embodiments of the present invention and are used to describe the principles of the present invention together with the Description. In the accompanying drawings the same components are represented by the same reference numbers. As shown in the drawings:
Fig. 1 is a schematic diagram of an LED illuminating apparatus according to the present invention;
Fig. 2 is a wave pattern of a power line communication signal of an LED illuminating apparatus according to the present invention; and
Fig. 3 is a schematic diagram of controlling an LED illuminating apparatus with a remote.

### Detailed Description of the Embodiments

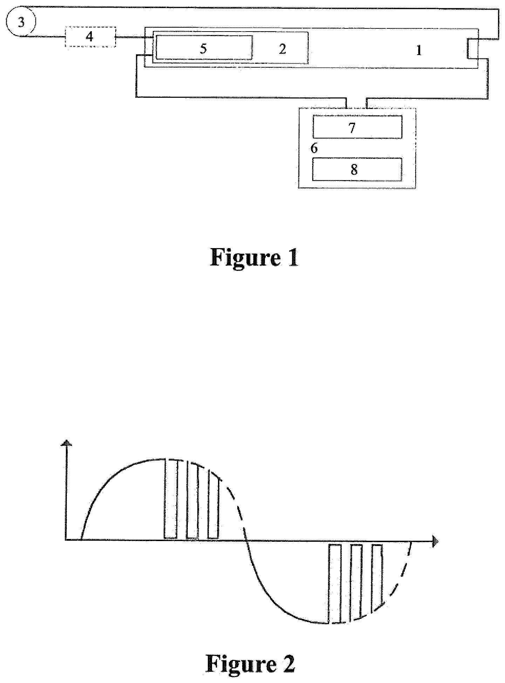

Fig. 1 is a schematic diagram of an LED illuminating apparatus according to the present invention. As can be seen from the figure, the LED illuminating apparatus comprises an LED lighting assembly 1 configured to be in a shape of a common fluorescent lamp tube, a driver 2 configured to drive the LED lighting assembly 1, and a ballast 4, wherein the ballast 4 is a CCG ballast that is connected, at one end, with an AC power supply 3, and at the other end, with the driver 2. In one solution of the present invention, the driver 2 is integrated into the LED lighting assembly 1. In addition, into the driver 2 is integrated a receiving unit 5 in one piece, and the receiving unit5 is configured as a first power line communication assembly. In addition, the LED illuminating apparatus according to the present invention further comprises a replaceable control unit 6 designed to be into a form of starter and inserted into a starter socket of the LED illuminating apparatus.

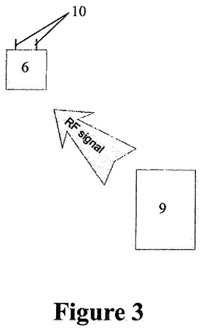

As can be seen from Fig. 1, the control unit 6 comprises a second power line communication assembly 7 and a function assembly 8. The function assembly 8 receives a control signal such as an RF radio frequency signal, a voice signal, a sensor signal or a step dim control signal from outside. Fig. 3 shows an example of controlling the LED illuminating apparatus with a remote 9. In this example, the remote 9 transmits an RF radio frequency signal, and the function assembly 8 configured as an RF radio frequency control module receives the RF radio frequency signal and sends a corresponding instruction signal. The second power line communication assembly 7 transmits the instruction signal to the receiving unit 5 configured as the first power line communication module by means of cutting off the electric power for a short period of time as shown in Fig. 2; and the receiving unit 5, upon receiving the instruction signal, transmits the same to the driver 2, and the driver 2 decodes the instruction signal and drives the LED lighting assembly 1 to realize a corresponding function.

In addition, it can be further seen from Fig. 3 that the control unit 6 designed into the form of starter comprises two pins 10 for supplying an electric power. The two pins 10 are also used as interfaces for communication with the receiving unit 5 so as to accomplish a power line communication. In one solution of the present invention, since the control unit 6 for realizing the function control is designed into the form of starter, such control unit 6 may be integrated with different types of functional assemblies 8, such as RF control assembly, voice control assembly, sensor control assembly or step dim control assembly. Therefore, functions can be changed by changing the control units 6 with different functions. Different functions can be realized simply by changing the control unit 6 designed as the starter without altering the whole configuration of the LED illuminating apparatus.

### List of reference signs

- 1: LED lighting assembly
- 2: driver
- 3: power supply
- 4: ballast
- 5: receiving unit
- 6: control unit
- 7: first power line communication assembly
- 8: function assembly
- 9: remote
- 10: pin

## Claims

1. An LED illuminating apparatus comprising: an LED lighting assembly (1), and a driver (2) configured to drive the LED lighting assembly (1), wherein the LED illuminating apparatus further comprises a replaceable control unit (6) configured to control the driver (2), and a receiving unit (5) connected between the control unit (6) and the driver (2), and wherein the receiving unit (5) is configured as a second power line communication assembly to receive an instruction signal from the control unit (6) and is further configured to transmit the same to the driver (2), wherein the LED illuminating apparatus is configured to be in a form of traditional fluorescent luminaire, and comprises a starter socket and a lamp holder for mounting the LED lighting assembly (1) configured to be in a form of traditional fluorescent lamp tube, wherein the control unit (6) is configured to be in a form of a starter applied to the traditional fluorescent luminaire and the control unit (6) can be inserted into the starter socket, and wherein the control unit (6) comprises a first power line communication assembly (7) to transmit said instruction signal to said second power line communication assembly and a function assembly (8).

2. The LED illuminating apparatus according to Claim 1, wherein the function assembly (8) is configured as an RF control assembly, a voice control assembly, a sensor control assembly or a step dim control assembly.

3. The LED illuminating apparatus according to Claim 2, wherein the function assembly (8) is configured to activate a corresponding function according to a control signal from outside.

4. The LED illuminating apparatus according to Claim 3, wherein the control signal from the outside is an RF radio frequency signal, a voice signal, a sensor signal or a step dim control signal.

5. The LED illuminating apparatus according to Claim 1, wherein the second power line communication assembly is integrated in the driver (2).

6. The LED illuminating apparatus according to any one of Claims 1-5, wherein the control unit (6) comprises two pins (10) for supplying an electric power and for communication.

7. The LED illuminating apparatus according to any one of Claims 1-5, wherein the LED illuminating apparatus further comprises a ballast (4) that is configured as a CCG and connects the driver (2) to a power supply (3).

## Patentansprüche

1. LED-Beleuchtungsvorrichtung mit: einer LED-Beleuchtungsanordnung (1), und einem Treiber (2), der so konfiguriert ist, dass er die LED-Beleuchtungsanordnung (1) ansteuert, wobei die LED-Beleuchtungsvorrichtung ferner eine austauschbare Steuereinheit (6), die so konfiguriert ist, dass sie den Treiber (2) steuert, und eine Empfangseinheit (5) umfasst, die zwischen der Steuereinheit (6) und dem Treiber (2) angeschlossen ist, und wobei die Empfangseinheit (5) als eine zweite Stromleitungs-Kommunikationsbaugruppe konfiguriert ist, um ein Befehlssignal von der Steuereinheit (6) zu empfangen, und ferner konfiguriert ist, um dasselbe an den Treiber (2) zu übertragen, wobei die LED-Beleuchtungsvorrichtung so konfiguriert ist, dass sie in einer Form einer herkömmlichen Leuchtstofflampe vorliegt, und eine Starterfassung und einen Lampenhalter zum Montieren der LED-Beleuchtungsanordnung (1) umfasst, die so konfiguriert ist, dass sie in Form einer herkömmlichen Leuchtstoffröhre vorliegt, wobei die Steuereinheit (6) so konfiguriert ist, dass sie in Form eines Starters vorliegt, der an der herkömmlichen Leuchtstofflampe angebracht wird, und die Steuereinheit (6) in die Starterfassung eingesetzt werden kann, und wobei die Steuereinheit (6) eine erste Stromleitungs-Kommunikationsanordnung (7) zum Übertragen des Befehlssignals an die zweite Stromleitungs-Kommunikationsanordnung und eine Funktionsbaugruppe (8) umfasst.

2. LED-Beleuchtungsvorrichtung nach Anspruch 1, wobei die Funktionsbaugruppe (8) als eine HF-Steuerbaugruppe, eine Sprachsteuerungsbaugruppe, eine Sensorsteuerungsbaugruppe oder eine Stufendimmsteuerungsbaugruppe konfiguriert ist.

3. LED-Beleuchtungsvorrichtung nach Anspruch 2, wobei die Funktionsbaugruppe (8) so konfiguriert ist, dass sie eine entsprechende Funktion in Abhängigkeit von einem Steuersignal von außen aktiviert.

4. LED-Beleuchtungsvorrichtung nach Anspruch 3, wobei das Steuersignal von außen ein HF-Funkfrequenzsignal, ein Sprachsignal, ein Sensorsignal oder ein Schrittdimm-Steuersignal ist.

5. LED-Beleuchtungsvorrichtung nach Anspruch 1, wobei die zweite Stromleitungs-Kommunikationsbaugruppe in den Treiber (2) integriert ist.

6. LED-Beleuchtungsvorrichtung nach einem der Ansprüche 1-5, wobei die Steuereinheit (6) zwei Stifte (10) zur Versorgung mit elektrischer Energie und zur Kommunikation umfasst.

7. LED-Beleuchtungsvorrichtung nach einem der Ansprüche 1-5, wobei die LED-Beleuchtungsvorrichtung ferner ein Vorschaltgerät (4) umfasst, das als ein CCG konfiguriert ist und den Treiber (2) mit einer Stromversorgung (3) verbindet.

## Revendications

1. Appareil d'éclairage à DEL comprenant : un ensemble d'éclairage à DEL (1), et un pilote (2) configuré pour exciter l'ensemble d'éclairage à DEL (1), l'appareil d'éclairage à DEL comprenant en outre une unité de commande remplaçable (6) configurée pour commander le pilote (2), et une unité de réception (5) connectée entre l'unité de commande (6) et le pilote (2),
et dans lequel l'unité de réception (5) est configurée en tant que deuxième ensemble de communication de ligne d'alimentation pour recevoir un signal d'instruction depuis l'unité de commande (6) et est en outre configurée pour transmettre celui-ci au pilote (2),
l'appareil d'éclairage à DEL étant configuré pour être sous forme de luminaire fluorescent conventionnel, et comprenant une douille de démarreur et une douille de lampe pour monter l'ensemble d'éclairage à DEL (1) configuré pour être sous une forme de tube de lampe fluorescent conventionnel, dans lequel l'unité de commande (6) est configurée pour être sous la forme d'un démarreur appliqué au luminaire fluorescent conventionnel et l'unité de commande (6) peut être insérée dans la douille de démarreur, et dans lequel l'unité de commande (6) comprend un premier ensemble de communication de ligne d'alimentation (7) pour transmettre ledit signal d'instruction audit deuxième ensemble de communication de ligne d'alimentation et un ensemble fonctionnel (8).

2. Appareil d'éclairage à DEL selon la revendication 1, dans lequel l'ensemble fonctionnel (8) est configuré en tant qu'ensemble de commande RF, ensemble de commande vocale, ensemble de commande de capteur ou ensemble de commande de gradation par étapes.

3. Appareil d'éclairage à DEL selon la revendication 2, dans lequel l'ensemble fonctionnel (8) est configuré pour activer une fonction correspondante conformément à un signal de commande provenant de l'extérieur.

4. Appareil d'éclairage à DEL selon la revendication 3, dans lequel le signal de commande provenant de l'extérieur est un signal de radiofréquence RF, un signal vocal, un signal de capteur ou un signal de commande de gradation par étapes.

5. Appareil d'éclairage à DEL selon la revendication 1, dans lequel le deuxième ensemble de communication de ligne d'alimentation est intégré dans le pilote (2).

6. Appareil d'éclairage à DEL selon l'une quelconque des revendications 1 à 5, dans lequel l'unité de commande (6) comprend deux broches (10) pour fournir une alimentation électrique et pour communication.

7. Appareil d'éclairage à DEL selon l'une quelconque des revendications 1 à 5, l'appareil d'éclairage à DEL comprenant en outre un ballast (4) qui est configuré sous la forme d'un CCG et connecte le pilote (2) à une alimentation électrique (3).
